# EUROPEAN PATENT SPECIFICATION

(11) **EP 2 199 465 B1**
(45) Date of publication and mention of the grant of the patent: **01.05.2013**
(21) Application number: 09180319.7
(22) Date of filing: 22.12.2009
(51) Int. Cl.: E01C 5/20, E04F 15/10

(54) **Interlocking modular flooring assembly with bevelled connectors**
Eingriffmodul-Fußbodenanordnung mit abgeschrägten Verbindungsstücken
Ensemble de plancher modulaire interbloquant doté de connecteurs biseautés

(30) Priority: 22.12.2008 US 139815 P
(43) Date of publication of application: 23.06.2010
(73) Proprietor: ANI-MAT INC., Sherbrooke, QC J1R 0S6 (CA)
(72) Inventor: Allard, Ange Albert, Drummondville Québec J2B 4P1 (CA); Savary, Pierre, Sherbrooke Québec J1L 0B2 (CA); Tremblay, Frederic, Sherbrooke Québec J0B 1H0 (CA); Lamontagne, David, Sherbrooke Québec J1H 5V8 (CA)
(74) Representative: Michalski Hüttermann & Partner Patentanwälte

(56) References cited:
- EP-A1- 0 117 638
- DE-A1- 2 435 735
- US-A- 888 530

## Description

### FIELD OF THE INVENTION:

The present embodied invention relates to the field of flooring surfaces and more particularly concerns a modular flooring assembly and mat units for such an assembly, such as rubber mats for livestock and the like.

### BACKGROUND:

EP-A-0117638 discloses a mat unit according to the preamble of claim 1.

In the context of indoor or outdoor installations of livestock operations, animals may spend several hours on non-natural and very hard floors, which can be hurtful to them. It is now well established that it is preferable to overlay hard floor surfaces of livestock housings with smooth flooring material to solve this problem.

Flooring assemblies for this purpose are well-known in the art and usually involve individual interlocking mat units. The assembly of such individual mat unit allows the construction of flooring which may be easily adapted to surfaces of various sizes and shapes.

It is generally desirable to be able to interlock adjacent mat units such that they remain tightly attached and form a uniform outer surface. For this purpose, it is known in the art to interlock different mat units by means of connectors made of mating teeth and groove. U.S. patent No. 654,532 (FURNESS) presents a flooring assembly of this type, showing square shaped tiles having either a groove or a tooth on each of its four sides. Two different types of tiles are therefore needed for assembly. One of the connecting elements, either the tooth or the groove, is upwardly bevelled whereas the other is downwardly bevelled, in a complementary manner.

Also, known in the art are connector made of alternating teeth and grooves, such as for example shown in U.S. patent No. 5,791,114 (MANDEL). The teeth along the edge of one tile are made to engage the grooves along the edges of another identical tile, necessitating only one kind of mat unit. The walls of the teeth and grooves are vertical to allow this universal connection. A small bevel towards the ground is provided along the bottom of each teeth and groove to facilitate the interlocking process.

A common problem encountered with the prior art flooring assembly is the "waving" phenomenon which occurs when external elements such as sand of liquid penetrate the joint between two adjacent mats units and accumulate under the flooring and thus form a "wave". When, for instance, machinery or livestock passes on the flooring it can displace the "wave" and eventually disconnect or break the mat unit. Also, in the case where the mat units are connected via interlocking teeth and grooves, it is common to see the edges of the teeth becoming exposed and curling upon repeated contact with animals and machinery. Obviously this deterioration of the joints weakens the flooring assembly and increases the risk that someone or something comes up against the exposed teeth and definitely damage the flooring assembly.

It is known in the art to affix in some manner the mat unit to the underlying floor surface. For example, U.S. patent No. 3,909,996 (ETTLINGER Jr. et al) present some interlocking tiles provided with traction plugs at various points of their bottom surfaces in order to adhere to the floor and prevent displacement. Flooring assemblies for heavy usage, such as is the case in a livestock environment, are usually secured in place by screws or nails. However, securing mat units in this fashion is labour intensive and protruding nails or screws present an injury risk for the livestock. Furthermore, the installation of such flooring with attachment means can damage existing facilities, for example a heating floor or water pipes embedded in the flooring. While the known prior art flooring systems have been adequate for many applications, there is still a need for an improved flooring assembly particularly adapted for use in locations where the interlock must be very tight and where the flooring mat unit connections should withstand intensive and highly demanding forces.

### SUMMARY OF THE INVENTION:

In accordance with one aspect of the embodied invention, there is provided a modular flooring assembly for heavy-duty applications, such as livestock.

The mat system includes a plurality of interlocked mat units, each mat unit having a plurality of edges, at least one of these edges defining a connector in a plane of the corresponding mat unit. Each connector has a plurality of alternating teeth and grooves respectively adapted to engage the grooves and teeth of an adjacent mat unit. Each groove is defined by a back wall recessed within the edge and two side walls shared with adjacent teeth on either sides of the groove. Each tooth is defined by a front wall projecting outwardly from the edge and two side walls shared with adjacent grooves on either side of the tooth. Each groove has a first bevel with respect to the plane mentioned above extending along the back wall and a rear portion of the corresponding side walls, whereas each tooth has a second bevel with respect to the plane extending along the front wall and a front portion of the corresponding side walls, the first and second bevels being complementary. Each side wall forms a twist transitioning between the first and second bevels.

The mat units are preferably made of a semi-rigid material, such as recycled rubber or the like. The semi-rigid material should provide enough rigidity for the target heavy-duty application while allowing enough deformability of the teeth to engage them in the grooves of an adjacent mat unit.

Preferably, the teeth and grooves each have an elliptical shape along the plane of the mat unit. The mat units are preferably rectangular-shaped and preferably include a connector along at least two of their edges.

In accordance with another aspect of the embodied invention, there is provided a mat unit having at least one connector as defined above.

In accordance with another aspect of the embodied invention, there is provided a kit for making a modular flooring assembly including a plurality of mat units as defined above.

Advantageously, embodiments of the present invention provide a flooring assembly in which adjacent mat units are strongly interlocked so as to remain so in use without the need for nailing or otherwise affixing the mat units to the ground.

Other features and advantages of the present embodied invention will be better understood upon reading of preferred embodiments with reference to the appended drawings.

### BRIEF DESCRIPTION OF THE DRAWINGS:

FIG. 1 shows a top view of a mat unit according to one embodiment of the invention.
FIG. 2 is an enlarged view of section II of FIG. 1, showing a tooth and a groove of the mat unit.
FIG. 3A is a cross-sectional view of the apex of a tooth taken along lines A-A of FIG. 2;
FIG. 3B is a cross-sectional view of the back wall of a groove taken along lines B-B of FIG. 2.
FIG. 4 is a three dimension view of the connector of the mat unit of FIG. 1.
FIG. 5 is a top view of a section of a flooring assembly including a plurality of mat units as shown in FIG. 1.
FIG. 6 is a view of a kit according to an aspect of the invention.

### DETAILED DESCRIPTION OF THE PREFERRED EMBODIMENTS:

The present invention provides a modular flooring assembly for heavy-duty applications. The expression "heavy-duty" is understood herein to refer to applications where the flooring assembly is subjected, at least occasionally, to strain or forces which tend to move or deforms the individual mat units or disengage neighbouring units. Such an application for example includes farming environments, in particular dairy farms, where such flooring assemblies are used in livestock facilities where cows or other animals are often confined for extended periods of time. Other heavy-duty applications may include garages, warehouses and also gymnasium or other sportive locations.

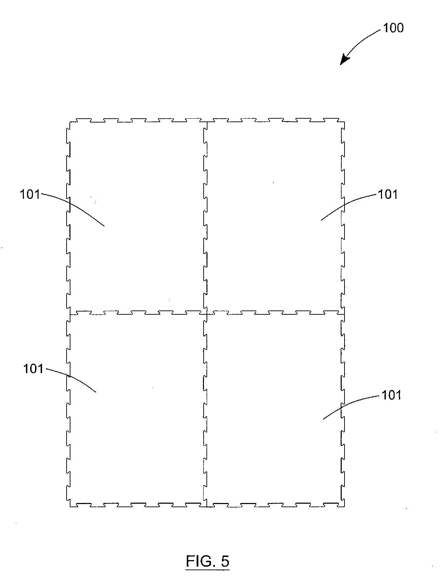

Referring to FIG. 5, there is shown a modular flooring assembly 100 according to an embodiment of the invention. The flooring assembly 100 includes a plurality of interlocked mat units 101. By "modular", it is meant that the mat units 101 are designed such that each unit 101 can be connected with identical or differently shaped mat units according to the present embodied invention. The modularity of the instant flooring assembly 100 allows a great flexibility and variety of possible arrangement of the mat units 101 to suit particular configuration of a surface to be covered.

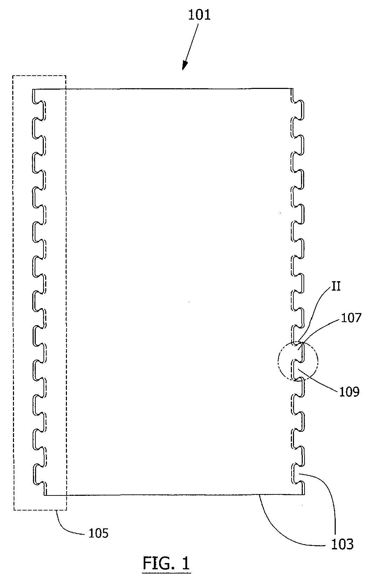

With reference to FIG. 1, there is shown a mat unit 101 adapted for use in a modular flooring assembly according to a preferred embodiment of the invention. The mat unit 101 has a top and a bottom surface and a plurality of edges 103 wherein at least one of said edges 103 defines a connector 105. The top surface is preferably textured in order to provide a non-slippery surface or to define decorative motifs. The bottom surface may for instance define channels or the like in order, for example, to increase the flexibility of the mat unit 101 and to ease the draining of liquid trapped between the floor and the mat unit 101. It will be understood that the number and disposition of edges 103 and connectors 105 on a single mat unit 101 depends on the shape needed to the particular application it is to be applied to. For example, the mat units 101 of the invention are preferably rectangular-shaped and preferably include two or four connectors 105. Alternatively, the mat units 101 can be pie slice-shaped in order to produce a circular configuration when such mat units 101 are connected together. In that context, the connector-free edges are curved and the edges defining connectors 105 are linear. Of course, numerous other shapes and configurations could be considered without departing from the scope of the invention. The edge that does not define a connector (*i*.*e*. a free edge) is preferably blunt or bevelled.

Each connector 105 comprises a plurality of alternating teeth 107 and grooves 109 respectively adapted to engage the grooves 109 and teeth 107 of an adjacent mat unit 101. Each tooth 107 and groove 109 is integral to the mat unit 101 and preferably has a uniform thickness, which is substantially equal to the thickness of the core of the mat unit 101 in order to obtain a plain and level flooring surface. For example, for typical applications, the thickness of the mat unit 101 may be from 1,5 to 3,0 cm. The connector 105 should preferably include at least two teeth 107 and one groove 109 or at least one tooth 107 and two grooves 109 in order to effectively connect two adjacent mat units 101.

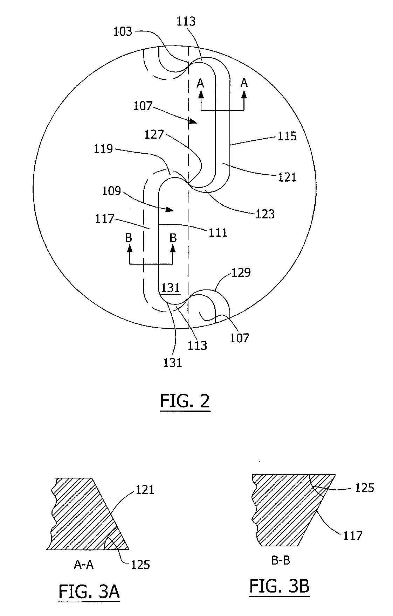

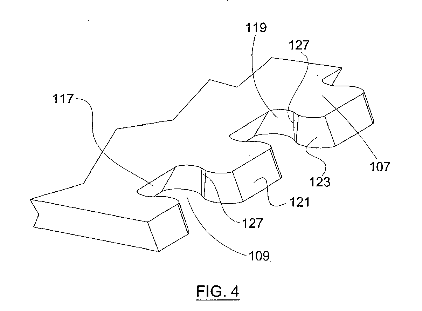

Referring to FIGs. 2 to 4, each groove 109 is defined by a back wall 111 recessed within the edge 103 and two side walls 113 shared with adjacent teeth 107 on either side of the groove 109. Each tooth 107 is defined by a front wall 115 projecting outwardly from the edge 103 and by two side walls 113 shared with adjacent grooves 109 on either side of the tooth 107. The grooves 109 and teeth 107 should be large enough to insure a solid connection of two adjacent mat units 101. Each groove 105 includes a first bevel 117 (see FIG. 2 and 3B) extending along the back wall 111 and a rear portion 119 of the side walls 113 whereas each tooth 107 comprises a second bevel 121 (see FIG. 2 and 3A) extending along the front wall 115 and a front portion 123 of the side walls 113, the first 117 and second 121 bevels being complementary. According to a preferred embodiment the bevels 117 and 121 have preferably an angle 125 with respect to the horizontal of more than 45° but less than 85° as shown in FIG. 3.

The angle of the inner portion 119 of each side wall 113 increases gradually to form a twist 127 transitioning between the first 117 and second 121 bevels as shown in FIG. 2. It is to be understood that the bevel of the teeth 107 and grooves 109 must be remain complementary through this transition. In the illustrated embodiment, the teeth 107 and the grooves 109 each have an elliptical shape along the plane of the mat unit 101 such that it defines bevelled rounded shoulders 129 on the teeth 107 and corresponding pockets 131 in the grooves 109. It is to be understood that the teeth 107 and grooves 109 may be shaped differently as long as the bevels 117 and 121 are effective to adequately interlock adjacent mat units 101.

One skilled in the art will readily understand that that the complementarities of the angle of the bevels 117 and 121 and the provision of twists 127 on the side walls of the grooves 109 which engage the twists 127 of the corresponding teeth 107 of another mat unit strengthen the joint between two adjacent connectors 105 and form a potent interlocking mean. This strong interlocking maximizes the tightness of the assembly and increases the strength of the joint between two adjacent mat units 101. The increased tightness of the joint between the mat units 101 prevents the penetration of external elements between the teeth 107 and grooves 109 and thus prevents the "waving" problem encountered with prior art elliptic teeth mentioned above. In addition it will be easily realized by the skilled person in the art that the bevelled elliptic shape of the teeth 107 and grooves 109 is effective in preventing the curling of the edges of the teeth 107 when for example there is sand or water underneath the mat unit 101.

Preferably, the mat units 101 are made of a semi-rigid and flexible material such as, for instance but not limited to, natural or synthetic rubber, recycled rubber, vinyl or other synthetic plastics, and flexible elastomeric material or the like. The semi-rigid material should provide enough rigidity for the targeted heavy-duty application while allowing enough deformability of the teeth 107 to engage them in the grooves 109 of an adjacent mat unit 101, insuring a tightly secured and uniform flooring surface with no visible joints. When subjected to temperature changes, the semi-rigid and flexible connectors 105 of the present flooring assembly 100 acts as expansion joints while keeping adjacent mat units 101 tightly and strongly attached. The resulting flooring assembly can thus advantageously be installed and used in, for instance but not limited to, highly demanding locations such farms, garages and warehouses but also in gymnasium or other sportive locations.

As will be further understood by one skilled in the art, embodiments of the present invention provide flooring assemblies in which adjacent mat units are strongly interlocked so as to remain in use without the need for nailing or otherwise affixing the mat units to the ground. The absence of separate connecting parts facilitates the assembly of the mat units, reduces the installation time and cost which obviously reduces the time the livestock is disturbed and reduces the likelihood of injuring the livestock. Moreover, it will be understood by the person skilled in the art that the present flooring assembly is advantageously installed where it is impossible to nail or otherwise affix regular mats. For instance, the present assembly is advantageously installed where water lines are buried into the floor or where the floor is a heating floor. Of course, in some circumstances, the mat units according to embodiments of the invention could still be nailed or otherwise affixed to the floor surface underneath if desired, without departing from the scope of the invention.

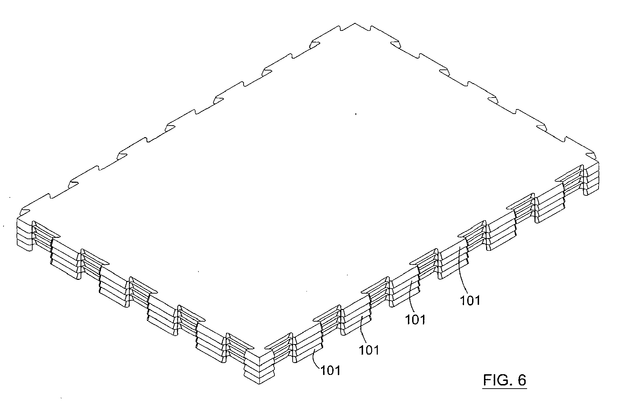

According to one embodiment, mat units as described above may be provided as a kit for making such modular flooring assembly 100. Referring to FIG. 6, such a kit includes a plurality of mat units 101 as described above. The mat units may be packaged together in any appropriate number to allow the installation of one flooring assembly, several such assemblies or a section of an assembly. It will be understood that the kit may include a series of identically shaped mat units 101 but also mat units 101 of various shapes. It will be understood that the specific configuration of the flooring assembly 100 can be customized without loosing the valuable properties mentioned above.

Advantageously, flooring assemblies according to embodiments of the invention provide strongly interconnected adjacent mat units 101 so as to remain in use with a minimum of maintenance and can withstand intensive and highly demanding uses such as for instance in farms.

## Claims

1. A modular flooring assembly for heavy-duty applications comprising:
a plurality of interlockable mat units, each mat having a plurality of edges, at least one of said edges defining a connector in a plane of the corresponding mat unit, each said connector comprising:
a plurality of alternating teeth and grooves respectively adapted to engage the grooves and the teeth of another one of said mat units, each said groove being defined by a back wall and two side walls shared with adjacent teeth on either sides of said groove, each said tooth being defined by a front wall and the side walls shared with adjacent grooves on either side of said tooth, each groove comprising of a first bevel with respect to said plane extending along said back wall and a rear portion of the corresponding side walls, each tooth comprising a second bevel with respect to said plane extending along said front wall and a front portion of the corresponding side walls, the first and second bevels being complementary and each side wall forming a twist transition between the first and second bevels.

2. A modular flooring assembly according to claim 1, wherein each of said mat units is made of semi-rigid material.

3. A modular flooring assembly according to claim 2, wherein each of said mat units is made of recycled rubber.

4. A modular flooring assembly according to claim 1, wherein each of said teeth and grooves has a substantially elliptical shape along the plane of the mat unit.

5. A modular flooring assembly according to claim 1, wherein each of said mat units has a substantially rectangular shape.

6. A modular flooring assembly according to claim 1, wherein the mat units each includes one of said connectors along at least two of said edges.

7. A modular flooring assembly according to claim 1, wherein said first and second bevels each define an angle with respect to said plane of the mat units between 45° and 85°.

8. A modular flooring assembly according to claim 1, wherein said first and second bevels each define an angle with respect to said plane of the mat units of about 63°.

9. A mat unit for a modular flooring assembly for heavy-duty applications comprising:
a plurality of edges, at least one of said edges defining a connector in a plane of the corresponding mat unit, each said connector comprising:
a plurality of alternating teeth and grooves respectively adapted to engage the grooves and the teeth of another one of said mat unit, each said groove being defined by a back wall and two side walls shared with adjacent teeth on either sides of said groove, each said tooth being defined by a front wall and the side walls shared with adjacent grooves on either side of said tooth, each groove comprising of a first bevel with respect to said plane extending along said back wall and a rear portion of the corresponding side walls, each tooth comprising a second bevel with respect to said plane extending along said front wall and a front portion of the c rresponding side walls, the first and second bevels being complementary **characterised in that** each side wall is forming a twist transition between the first and second bevels.

10. A mat unit for heavy-duty applications according to claim 9, wherein said mat unit is made of semi-rigid material.

11. A mat unit for heavy-duty applications according to claim 10, wherein said mat unit is made of recycled rubber.

12. A mat unit for heavy-duty applications according to claim 9, wherein each of said teeth and grooves has a substantially elliptical shape along the plane of the mat unit.

13. A mat unit for heavy-duty applications according to claim 9, wherein the mat unit has a substantially rectangular shape.

14. A mat unit for heavy-duty applications according to claim 9, wherein the mat unit include one of said connectors along at least two of said edges.

15. A kit for making a modular flooring assembly comprising a plurality of mat units according to claim 9.

## Patentansprüche

1. Eine modulare Fußbodenanordnung für den Schwerlasteinsatz aufweisend:
eine Vielzahl zusammensteckbarer Fußmatten-Elemente, jede Fußmatte mit einer Vielzahl an Kanten, wobei wenigstens eine dieser Kanten eine Steckverbindung in einer Ebene des korrespondierenden Fußbodenmatten-Elementes ausbildet und jede Steckverbindung aufweist:
eine Vielzahl alternierender Zacken und Einkerbungen angepasst um jeweils in die Zacken und Einkerbungen einer weiteren besagter Fußmatten-Elemente zu greifen, wobei jede Einkerbung durch eine rückliegende Wandung und zwei Seitenwände gebildet wird, welche sie gemeinsam mit benachbarten Zacken zu beiden Seiten besagter Einkerbung teilt, jeder besagte Zacken eine Stirnwand und die Seitenwände aufweist, welche er mit benachbarten Einkerbungen zu beiden Seiten besagten Zackens teilt, jede Einkerbung eine erste abgeschrägte Kante bezüglich einer Ebene ausgehend entlang der rückliegenden Wandung und einem rückwärtigen Abschnitt der entsprechenden Seitenwände aufweist, jeder Zacken in Bezug zu besagter Ebene entlang besagter Stirnwand und einem vorderen Abschnitt der entsprechenden Seitenwände eine zweite abgeschrägte Kante aufweist, die erste und zweite abgeschrägte Kante komplementär zueinander verlaufen und jede Seitenwand einen Wendeübergang zwischen den ersten und zweiten Abschrägungen ausbildet.

2. Eine modulare Fußbodenanordnung nach Anspruch 1, wobei jedes besagter Fußmatten-Elemente aus halbsteifen Material besteht.

3. Eine modulare Fußbodenanordnung nach Anspruch 2, wobei jedes besagter Fußmatten-Elemente aus recyceltem Gummi besteht.

4. Eine modulare Fußbodenanordnung nach Anspruch 1, wobei jeder der besagten Zacken und der Einkerbungen eine im Wesentlichen elliptische Form entlang der Ebene des Fußmatten-Elementes aufweist.

5. Eine modulare Fußbodenanordnung nach Anspruch 1, wobei jedes besagter Fußmatten-Elemente eine im Wesentlichen rechteckige Form aufweist.

6. Eine modulare Fußbodenanordnung nach Anspruch 1, wobei jedes Fußmatten-Element eine der besagten Steckverbindungen entlang wenigstens zweier ihrer Kanten beinhaltet.

7. Eine modulare Fußbodenanordnung nach Anspruch 1, wobei besagte erste und zweite abgeschrägte Kante mit besagter Ebene der Fußmatten-Elemente jeweils einen Winkel zwischen 45° und 85° bilden.

8. Eine modulare Fußbodenanordnung nach Anspruch 1, wobei besagte erste und zweite abgeschrägte Kante mit besagter Ebene der Fußmatten-Elemente jeweils einen Winkel um 63° bilden.

9. Ein Fußmatten-Element für eine modulare Fußbodenanordnung für den Schwerlasteinsatz aufweisend:
eine Vielzahl an Kanten, wobei wenigstens eine dieser Kanten eine Steckverbindung in einer Ebene des korrespondierenden Fußbodenmatten-Elementes ausbildet und jede Steckverbindung aufweist:
eine Vielzahl alternierender Zacken und Einkerbungen angepasst um jeweils in Zacken und Einkerbungen einer weiteren besagter Fußmatten-Elemente zu greifen, wobei jede Einkerbung durch eine rückliegende Wandung und zwei Seitenwände gebildet wird, welche sie gemeinsam mit benachbarten Zacken zu beiden Seiten besagter Einkerbung teilt, jeder besagte Zacken eine Stirnwand und die Seitenwände aufweist, welche er mit benachbarten Einkerbungen zu beiden Seiten besagten Zackens teilt, jede Einkerbung in Bezug zu besagter Ebene ausgehend entlang der rückliegenden Wand und einem rückwärtigen Abschnitt der entsprechenden Seitenwände eine erste abgeschrägte Kante aufweist, jeder Zacken in Bezug zu besagter Ebene entlang besagter Stirnwand und einem vorderen Abschnitt der entsprechenden Seitenwände eine zweite Abschrägung aufweist, die erste und zweite abgeschrägte Kante komplementär zueinander verlaufen, **dadurch gekennzeichnet, dass** jede Seitenwand einen Wendeübergang zwischen erster und zweiter Abschrägung ausbildet.

10. Ein Fußmatten-Element für den Schwerlasteinsatz nach Anspruch 9, wobei besagtes Fußmatten-Element aus halbsteifen Material besteht.

11. Eine Fußmatten-Element für den Schwerlasteinsatz nach Anspruch 10, wobei besagtes Fußmatten-Element aus recyceltem Gummi besteht.

12. Ein Fußmatten-Element für den Schwerlasteinsatz nach Anspruch 9, wobei jeder besagter Zacken und Einkerbungen eine im Wesentlichen elliptische Form in Richtung der Ebene des Fußmatten-Elementes aufweist.

13. Ein Fußmatten-Element für den Schwerlasteinsatz nach Anspruch 9, wobei das Fußmatten-Element eine im Wesentlichen rechteckige Form aufweist.

14. Ein Fußmatten-Element für den Schwerlasteinsatz nach Anspruch 9, wobei das Fußmatten-Element eine der besagten Steckverbindungen entlang wenigstens zweier besagter Kanten beinhaltet.

15. Ein Kit zur Herstellung einer modularen Fußbodenanordnung enthaltend eine Mehrzahl von Fußmatten-Elementen nach Anspruch 9.

## Revendications

1. Ensemble de plancher modulaire pour les applications lourdes comprenant :
une pluralité d'unités de panneaux interverrouillables, chaque panneau ayant une pluralité de bords, au moins l'un desdits bords définissant un connecteur dans un plan de l'unité de panneau correspondante, chacun desdits connecteurs comprenant :
une pluralité de dents et de rainures alternées adaptées respectivement pour s'enclencher dans les rainures et les dents d'une autre desdites unités de panneaux, chacune desdites rainures étant définie par une paroi arrière et deux parois latérales partagées avec les dents adjacentes des deux côtés de ladite rainure, chacune desdites dents étant définie par une paroi avant et les parois latérales partagées avec les rainures adjacentes de chaque côté de ladite dent, chaque rainure comprenant un premier biseau relatif audit plan s'étendant le long de ladite paroi arrière et une portion arrière des parois latérales correspondantes, chaque dent comprenant un deuxième biseau relatif audit plan s'étendant le long de ladite paroi avant et une portion avant des parois latérales correspondantes, le premier et le deuxième biseaux étant complémentaires et chaque paroi latérale formant une transition coudée entre le premier et le deuxième biseaux.

2. Ensemble de plancher modulaire conforme à la revendication 1, dans lequel chacune desdites unités de panneaux est réalisée en matériau semi-rigide.

3. Ensemble de plancher modulaire conforme à la revendication 2, dans lequel chacune desdites unités de panneaux est en caoutchouc recyclé.

4. Ensemble de plancher modulaire conforme à la revendication 1, dans lequel chacune desdites dents et rainures ont une forme substantiellement elliptique le long du plan de l'unité de panneau.

5. Ensemble de plancher modulaire conforme à la revendication 1, dans lequel chacune desdites unités de panneaux a une forme substantiellement rectangulaire.

6. Ensemble de plancher modulaire conforme à la revendication 1, dans lequel chaque unité de panneau comprend l'un desdits connecteurs le long d'au moins deux desdits bords.

7. Ensemble de plancher modulaire conforme à la revendication 1, dans lequel lesdits premier et deuxième biseaux définissent chacun un angle compris entre 45 et 85 degrés par rapport audit plan des unités de panneaux.

8. Ensemble de plancher modulaire conforme à la revendication 1, dans lequel lesdits premier et deuxième biseaux définissent chacun un angle d'environ 63 degrés par rapport audit plan des unités de panneaux.

9. Unité de panneau pour ensemble de plancher modulaire pour les applications lourdes comprenant :
une pluralité de bords, au moins l'un desdits bords définissant un connecteur dans un plan de l'unité de panneau correspondante, chacun desdits connecteurs comprenant :
une pluralité de dents et de rainures alternées adaptées respectivement pour s'enclencher dans les rainures et les dents d'une autre desdites unités de panneaux, chacune desdites rainures étant définie par une paroi arrière et deux parois latérales partagées avec les dents adjacentes des deux côtés de ladite rainure, chacune desdites dents étant définie par une paroi avant et les parois latérales partagées avec les rainures adjacentes de chaque côté de ladite dent, chaque rainure comprenant un premier biseau relatif audit plan s'étendant le long de ladite paroi arrière et une portion arrière des parois latérales correspondantes, chaque dent comprenant un deuxième biseau relatif audit plan s'étendant le long de ladite paroi avant et une portion avant des parois latérales correspondantes, le premier et le deuxième biseaux étant complémentaires et chaque paroi latérale formant une transition coudée entre le premier et le deuxième biseaux.

10. Unité de panneau pour les applications lourdes conforme à la revendication 9, dans laquelle ladite unité de panneau est réalisée en matériau semi-rigide.

11. Unité de panneau pour les applications lourdes conforme à la revendication 10, dans laquelle ladite unité de panneau est en caoutchouc recyclé.

12. Unité de panneau pour les applications lourdes conforme à la revendication 9, dans laquelle chacune desdites dents et rainures ont une forme substantiellement elliptique le long du plan de l'unité de panneau.

13. Unité de panneau pour les applications lourdes conforme à la revendication 9, dans laquelle l'unité de panneau a une forme substantiellement rectangulaire.

14. Unité de panneau pour les applications lourdes conforme à la revendication 9, dans laquelle l'unité de panneau comprend l'un desdits connecteurs le long d'au moins deux desdits bords.

15. Kit pour la fabrication d'un ensemble de plancher modulaire comprenant une pluralité d'unités de panneaux conformes à la revendication 9.
